# EUROPEAN PATENT APPLICATION

(11) **EP 1 416 745 A1**
(43) Date of publication of application: **06.05.2004**
(21) Application number: 02024265.7
(22) Date of filing: 31.10.2002
(51) Int. Cl.: H04Q 7/22, G08G 1/0967

(54) **Localisation method**

(71) Applicant: SIEMENS AKTIENGESELLSCHAFT, 80333 München (DE)
(72) Inventor: Scholz, Frank, Dr., 85667 Oberpframmern (DE)

(57) **Abstract**

A method for locating a communication device, whereby an emergency call routine is activated, by which the following steps are performed:
- Detecting which at least one communications network is existent at the location of the communication device
- In case that more than one communications network is existent, determining a priority of the communications networks;
- In case that only one network is existent assigning the highest priority to this network
- Sending an emergency signal over the network with the highest priority.

## Description

### Field of the Invention

This invention relates to a localisation method used in connection with emergency calls in mobile communications systems.

### Background of the Invention

The demand for security is rapidly growing and thus advanced technology in communications, safety, and security systems is mandatory in order to maintain, track and respond to alarm signals. A wide variety of emergency call systems has been used, including direct connected, i.e. hard wired systems, wireless systems, and telephone systems.

If an emergency call is made, furthermore a localisation of the communication device and its respective user is desirable. Within communications systems various methods for determining a position are known, such as using the cell identification (cell ID), or localisation methods within a cell, e.g. E-OTD (Enhanced Observed Time Difference).

However, to make use of emergency call systems with localisation methods, it is necessary to be connected to the respective cellular network. In other words, no emergency call can be made if no network is available.

### Disclosure of the Invention

Based on the foregoing description it is an object of the invention to provide a method, an apparatus and a system for safely making an emergency call, regardless of the respective cellular network connection.

The object of the invention will be achieved with a method, a communication device and a system which are characterised by what is disclosed in the appended independent claims. Advantageous embodiments of the present invention will be presented in the dependent claims.

The invention is based on the idea of selecting one network out of a plurality of possibly available networks and sending an emergency signal over the selected network. According to preferred embodiments of the invention, one of these communications networks may be an emergency location transmitter (ELT) network, e.g. an airborne or other safety network. According to another or the same preferred embodiment of the invention one of these communication networks may be a cellular, e.g. a mobile phone, network. Such a safety network may exist independently from any cellular communications network.

Thus, upon activating an emergency call routine at a communication device, a module for broadcasting over the safety network can be enabled, if a cellular network is not available.
By broadcasting we understand a transmitting to all stations in the range of the communication device.
Now two cases are to be distinguished

### 1) A cellular network is available:

In this case a emergency call procedure is performed by using the cellular network. Additional services, e.g. a more accurate localisation, can be requested optionally from a suitable instance of the safety network, e.g. a a safety control centre.

### 2) No cellular network is available

In this case a emergency call procedure is performed by using an a safety network.

### Brief description of the drawings

In the following, the invention will be described by means of preferred embodiments with reference to the accompanying drawing, in which:
- Figure 1: is an exemplary embodiment of an apparatus aligned to make emergency calls by pushing only one button,
- Figure 2: shows a schematic block diagram concerning the relations between user, network providers and safety control centres in the case of public sponsorship of the emergency number, and
- Figure 3: shows a similar diagram for private and public sponsorship.

### Detailed description of the invention

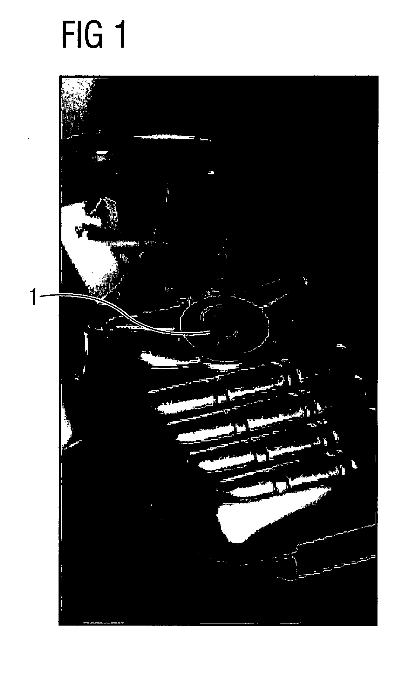

Reference is now made to Figure 1. In this preferred embodiment the underlying idea is that help can be reached by just pushing one single button (1) in a communication device that is widespread, e.g. a mobile phone or cell phone or any mobile communication device. Hence the communication device may be not only a cell phone but also any other kind of mobile equipment allowing to establish a connection to a cellular communications network.
The button 1 initiates an emergency call routine, by which an emergency call is performed using or utilising a network that is determined by the routine. Thus a world-wide safety system would be available by using a cell phone, even if there is no cellular communications network such as GSM (Global System for Mobile Communications) available. This concept complies with the risen safety awareness anywhere in the world. Wide availability can be achieved by using cell phones or generally mobile equipment which are lowcost widespread communication devices.
By cellular (communications) network we refer to any network such as GSM (Global System for Mobile Communications), TDMA/CDMA (Time Division Multiple Access / Code Division Multiple Access) based networks, UMTS (Universal Telecommunications System), WLAN (Wireless Local Area Network)-Systems.

The concept makes use of an emergency or global safety network, e.g. an airborne network comprising satellites and/or aircraft. This will be described below in detail:

Typical safety networks may exist independently from any cellular network and are based on e.g. airborne objects and/or satellites and/or radio beacons. As the beacons, that can be operated as a transponder and/or a transmitter, can be mobile, we refer to them as a network with mobile transmitter stations or an emergency network in the framework of the application. The mobile beacons can be placed e.g. on a aircraft or on a vessel.

In the following some more details are given about safety networks: By law, all civil and military aircraft carry an emergency location transmitter (ELT) on board. The ELT begins transmitting when it is activated by the gravitational forces caused by an aircraft crash. When another aircraft or satellite receives an emergency signal it transfers information about the crash location to the respective air search and rescue centres. More generally spoken the aircrafts and satellites are able to receive signals from emergency radio beacons and relay them to ground stations, which, in turn, process the signal to determine where the beacon is located. The ground stations then relay this information to search and rescue authorities. The system has four parts: emergency radio beacons, which call for help; aircrafts and satellites to receive said calls; ground stations, which get the message; and control centres, which sound the alarm.

The emergency radio beacon has two functions: if somebody is in distress in a remote area he can make an emergency call and secondly by doing so also information is provided about his location. There are three kinds of radio beacons, classified by who uses them. Aircrafts normally have an emergency location transmitter (ELT). At sea, the vessel should have an emergency position indicating radio beacon (EPIRB). Personal location beacons (PLB) are for land activities such as hiking or camping in the wilderness. The radio beacons can transmit signals on certain emergency frequencies normally located in (but not limited to) the VHF (Very High Frequency) region between a hundred and a few hundred MHz. Every signal of a beacon can be detected by airborne objects or satellites or can be repeated by another beacon, e.g. carried by aircraft passing by, which is then functioning as a transponder.
To sum up the emergency network is used for communication, identification and localisation. Therefor, the proven ELT (Emergency Location Transmitter) technology principle is used. By identification of a communication device or its respective user the identification can be based on the telephone number, the IMEI (International Mobile Equipment Identity) etc.

In the context of the application by airborne network not only a network provided by the satellites is covered, but also a network based upon the satellites in combination with transponders or transmitters placed in aircrafts or vessels.

An ELT activator suitable for a communication device may consist of a detector sensible to gravitational forces, sensible to smoke, sensible to pressure, temperature or various other environmental parameters. Apart from environmental parameters the ELT activator may also detect certain personal parameters, by which conclusions about the person's health state can be made.

Now an exemplary method is described to perform the locating routine:
1. A security button 1 e.g. as shown in Figure 1 is pushed. This activates an emergency call routine. The emergency routine comprises the following steps, which are partially optional:
2. In case the mobile is switched off it may activate the mobile. In case or as soon as the mobile is switched on, a module for broadcasting over the emergency network, that may operate on frequencies distinct from those of the cellular communication network, is activated. This activation can be done optionally also regardless of the possibility to establish a connection to a cellular communication network. By activating the module for broadcasting an immediate enabling can be understood or the starting of a countdown period after which the module is enabled. Said module is also referred to as ELT module, the respective activator as ELT activator. The ELT module is off during normal operation e.g. in order to reduce power consumption.
3. Now a distinction has to be made whether a connection to a cellular communications network is available or not:
   a) A cellular communications network is available: In case there is a contact to a cellular network, the activating of the emergency call routine initiates a speech connection, which is established via the cellular communications network to a safety control centre. A further identification and localisation of the caller is done via the speech connection (descriptions of the user) or automatic methods of the cellular network, such as using the cell identifier or E-OTD. Additionally a predefined routine may be started for providing additional optimal help, i.e. e.g. using localisation methods of the emergency network.
   b) No cellular communications network is available:
      Without a contact to a cellular communications network contact, an emergency procedure via the emergency network, e.g. a ELT distress signal is automatically activated. Then the safety cell phone broadcasts an ELT signal. This signal will be received by an emergency network, e.g. an airborne network and it is attempted to connect to a safety control centre or the receiving station will inform the safety control centre and/or rescue and help services.
4. Hence in both cases, the transmitter of the emergency signal or the user of the communication device can be located accurately via radio and/or cellular communications network bearing. The safety control centre will take further actions in the field of emergency or distress phases. Safety control centre will then coordinate other service suppliers, e.g. an automobile association a fire brigade.

To recapitulate, the choice exists to locate distressed persons via a cellular network, e.g. GSM, and/or ELT signals from a cell phone. Furthermore, a voice connection can be established via GSM if a GSM network any other cellular network is available. A safety control centre (SCC) is foreseen to coordinate optimal help.

A preferred embodiment of an apparatus allowing above described procedures of making an emergency call comprises typically a safety or security button 1, which by being pushed activates the emergency call routine. Furthermore, it comprises an ELT module which allows to transmit and/or transpond emergency signals. It also comprises optionally an ELT activator, that activates the ELT module, as already described above. It may further comprise an additional power supply for the ELT module. For aeroplanes, as already described, the ELT activator reacts somehow on gravitational forces. In the framework of the invention, however, the ELT activator can be also realised differently, which will be explained below. An additional power supply allows longer operation of the ELT module. An automatic communication setup helps during the establishment of a speech connection. A programmable automatic log-on mode allows accessing the emergency call routine even if the user is not in position to do so manually. Preferably, the body of the communication device, e.g. the cell phone is shock resistant. Also, an emergency amplification of the GSM signal can be foreseen.

Now another exemplary embodiment of the above-mentioned emergency routine will be described in further details. As already said, by pushing the safety button 1 an emergency routine is started within the cell phone: therefore, first an ELT activity countdown is started within the cell phone, regardless of any network connection. After the ELT activity countdown the ELT module is enabled. Then, it has to be differentiated between a situation with a cellular communications network contact and a situation without a cellular communications network contact. In case a contact to a cellular communications network can be established, pushing the safety button 1 means, that the safety control centre (SCC) is being rung by the cell phone. The caller can report a distress and provide further details if he is able to and it is possible. The safety control centre tries to identify the caller, the nature of the problem and may retrieve possible medical data of the caller, if the caller is in position to speak. Furthermore, the safety control centre tries to determine geographical coordinates, e.g. via voice and/or cellular communication network data. Within a cellular network various methods for locating are known, e.g. the above-mentioned E-OTD method. As the spatial resolution of localisation methods within a cellular communications network is limited, it is decided by the safety control centre, whether ELT search is necessary to achieve an enhanced localisation. Having made this decision, the safety control centre transmits an ELT activation or deactivation code to the cell phone.

In the case without any cellular communications network contact an automatic activation of the ELT distress signal is performed. Upon this distress signal emergency procedures are being organised by the SCC, example giving alarming the police, the fire brigade, ambulance, air rescue, etc. Furthermore, the safety control centre submits location data to search and rescue forces with a link to the activated ELT signal or by supporting then without ELT guidance. An emergency assistance operator may confirm the completion of an operation to the safety control centre.

In a further embodiment it is foreseen that the safety cell phone can be activated remotely in order to search for missing persons, children or cars. To prevent unwanted use of this method this modus of remote activation has to be enabled by the user of the cell phone. Also, an automatic check or a safety centre search signal in predetermined time interval may be foreseen, even if the power of the cell phone is switched off.

The various embodiments of the invention exhibit major advantages for a safety cell phone concept. The ELT modules, which are to be integrated, are customary in air or vessel traffic. They can broadcast ELT signals in predefined emergency frequencies. The technology within the cell phone has to be adapted and an integration of the safety feature in a standard cell phone housing is possible.

The above-mentioned safety control centre may offer a 24 hour service around the year, voice communication in most common languages of the respective area, a direct interface to emergency operators and cellular network providers, and the access to personal or health data of any cell phone owner. The safety control centre may be a public or private body, which is to be financed accordingly.

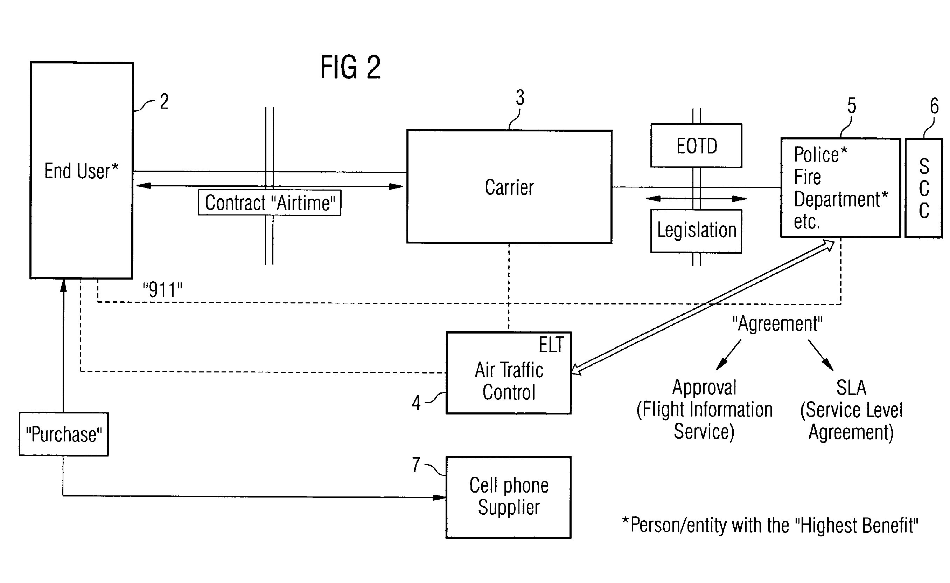

In Figure 2 a schematic drawing between users, network providers (carriers) and safety instances are shown: the end user will purchase a cell phone with contract by a supplier 7. The end user 2 may access air traffic control (ELT) 4 via his/her ELT module. Furthermore, the end user 2 can reach emergency instances 5 such as police, fire department, etc. via an emergency number, e.g. 911. The end user 2 can have a normal cellular communications network connection provided by the carrier 2 of the respective cellular communications network. The carrier 2 himself provides data about localisation run by e.g. EOTD to the security instance 5 such as police or the fire brigade, etc. This information transfer is mainly limited by legislation. The security instance 5, which may be part of the safety control centre 6, have an agreement with the air traffic control 4 , thus they can also access the far more exact ELT localisation data.

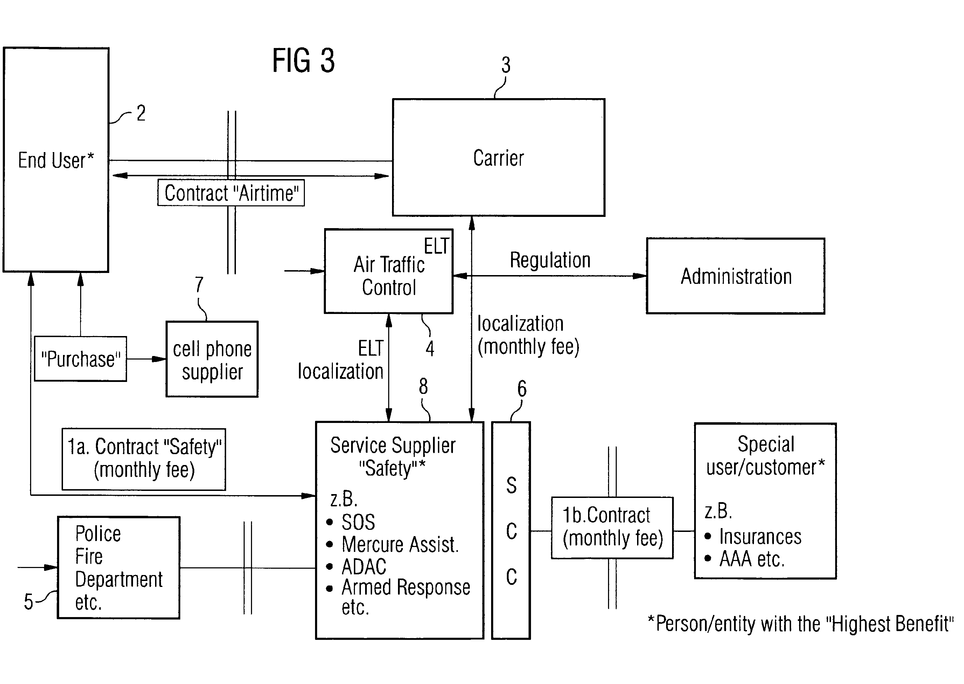

In Figure 3 an extension of this diagram is shown if the safety control centre 6 is sponsored by private and public sectors. The end user 2 himself can as before purchase a cell phone by a cell phone supplier 7 and have a contract with a cellular network provider, a carrier 3. Additionally, the end user 2 can have a certain safety contract with a safety service supplier 8, e.g. SOS, emergency assistance, an automobile association or an armed response. This safety service supplier 8 may be affiliated in some way to the service control centre 6 and be in contact with the security instance 5, e.g. police or fire brigade, or also special users and customers such as an automobile association. The safety control centre 6 has again a connection to the air traffic control 4 and the network provider 3. The air traffic control 4 may be regulated by the administration of a respective area.

## Claims

1. A method for locating a communication device, whereby an emergency call routine is activated, by which the following steps are performed:
- Detecting at least one available communications network at the location of the communication device;
- In case that more than one communications network is existent, selecting one of the communications networks;
- In case that only one communications network is available selecting this communications network;
- Sending an emergency signal over the selected network.

2. The method according to claim 1, whereby at least one of the communications network comprises mobile transceiver or transponder stations, by which the emergency signal from the communication device are further transmitted or that function as a transponder for said emergency signal.

3. The method according to claim 1 or 2, whereby a further network is a cellular network.

4. The method according to any of the previous claims, whereby the emergency call routine also comprises the identification of the communication device.

5. The method according to any of the previous claims, whereby also a speech connection is established over one of the existent communications networks.

6. The method according to any of the previous claims, whereby the emergency call routine can be activated remotely.

7. A Communication device for performing a method according to claims 1 to 6.

8. The communication device according to claim 7, comprising at least two radio modules, one of said radio modules being manually or automatically activable.

9. The communication device according to claim 7 or 8, whereby the method according to claims 1 to 6 can be activated by pushing one button on the communication device.

10. The communication device according to any of the claims 7 to 9, whereby the communication device is a cellular phone.

11. Communications System comprising a communication device according to any of the claims 7 to 10.
